# EUROPEAN PATENT SPECIFICATION

(11) **EP 1 052 445 B1**
(45) Date of publication and mention of the grant of the patent: **13.07.2005**
(21) Application number: 00303927.8
(22) Date of filing: 10.05.2000
(51) Int. Cl.: F16N 25/02

(54) **Lubricant supply device**
Schmiermittelfördereinrichtung
Dispositif d'alimentation en lubrifiant

(30) Priority: 12.05.1999 DE 19921685; 08.07.1999 DE 19931730; 12.10.1999 US 414959; 04.04.2000 US 542190
(43) Date of publication of application: 15.11.2000
(73) Proprietor: Lincoln GmbH & Co. KG, 69190 Walldorf (DE)
(72) Inventor: Paluncic, Zdravko, 67067 Ludwigshafen (DE); Grach, Ayzik, Chesterfield, Missouri 63017 (US); Holland, Christopher D., Wood River, Illinois 62095 (US); Kannegiesser, Herbert, 40591 Düsseldorf (DE)
(74) Representative: Smaggasgale, Gillian Helen

(56) References cited:
- EP-A- 0 313 821
- DE-C- 19 809 620
- GB-A- 711 937
- GB-A- 1 186 996
- US-A- 5 188 197
- US-A- 5 542 498
- US-A- 5 662 023

## Description

### Summary of the Invention

The invention relates to a lubricant supply device with a storage reservoir for the lubricant, a lubricant distributor (e.g., a progressive divider valve assembly) for distributing lubricant to various points of lubrication, a feed pump for delivering lubricant to the distributor, and at least one motor for driving the feed pump.

In conventional devices of the type described above, the lubricant distributor is connected to the lubricant pump using separate high-pressure hoses. The use of such hoses requires a large amount of installation space. Moreover, the hoses are expensive and subject to failure. Another disadvantage of such conventional devices is that any distributor outlets not in use are typically connected to one or more outlets which are in use, which can result in the delivery of excessive lubricant to one or more points of lubrication.

GB-A-1186996 discloses a lubricating system for operating distributors (e.g., metering valves) which are located remote from a pump. The system is convertible for use with two different types of distributors, including series-type metering valves operable with a single lubricant conduit, or line, extending from the pump to the valves, and parallel-type metering valves operable with two or more parallel lubricant lines extending from the pump to the valves.

US-A-5188197 discloses a lubricating system having a reservoir pump and six lubricant distributors. The distributors each deliver a metered quantity of lubricant. A pressure-relief and pressure-limiting valve cycles pressure and delivers lubricant from the reservoir to a mouthpiece of a connection piece connecting to a line leading to the distributors.

Among the several objectives of this invention may be noted the provision of an improved lubricant supply device which is simpler, more compact and more operationally reliable; the provision of such a device which eliminates the need for high-pressure hoses to the distributor; the provision of such a device in which unused outlets of the distributor are connected to the housing for return of lubricant to the reservoir; the provision of such a device having different distributor mounting options to accommodate different types and/or configuration of lubricant delivery lines; and the provision of such a device which is economical to manufacture.

According to the present invention there is provided a lubricant supply device comprising: a housing defining a reservoir for holding a supply of lubricant; a pump in said housing, said pump having an inlet for receiving lubricant from said reservoir and an outlet; a lubricant distributor having a sealing connection with the housing, said distributor for delivering predetermined quantities of lubricant to multiple points of distribution, said distributor having one or more inlets for entry of lubricant into the distributor and multiple outlets for exit of lubricant from the distributor for delivery to said multiple points of lubrication; said sealing connection comprising mating surfaces on the distributor and the housing having a sealing fit with one another; supply passaging in the housing extending from the outlet of the pump and terminating at one or more outlet openings in the mating surface of the housing; each of said one or more distributor inlets comprising an inlet opening in the mating surface of the distributor located generally opposite a corresponding outlet opening in the mating surface of the housing whereby lubricant from the pump is adapted to flow from said supply passaging of the housing directly into said one or more distributor inlets; and wherein said housingcomprises a first housing part defining a pump chamber for housing the pump, said first housing part having a bottom wall with a downwardly facing bottom surface forming said mating surface of the housing, said supply passaging in the housing being formed in said bottom wall, said distributor having an upwardly facing surface forming said mating surface of the distributor.

In an especially simple design of the lubricant supply device of this invention, the motor actuates a piston of the feed pump via an eccentric rotatably supported on a shaft. For the sake of simplicity, the shaft may also rotatably support an agitator which pushes the lubricant from the storage reservoir downwardly in a direction toward the feed pump. Further, a simple and reliable construction is ensured if the eccentric and the agitator are preferably driven jointly by the motor of the feed pump via a pinion/gearwheel drive.

The housing comprises a first housing part defining a pump chamber. The first housing part has a bottom wall, a rim extending up from the bottom wall and an intermediate wall on the rim spaced above bottom wall. The agitator preferably rotates directly underneath the intermediate wall through which the shaft extends and in which an opening for the lubricant is provided. In this way, the lubricant is conveyed effectively in the direction toward the feed pump.

The first housing part can support a removable second housing part which forms the reservoir and in which a follower plate is guided for pressurizing lubricant in the reservoir. This second housing part can be transparent such that the level of fill can be observed visually.

The second housing part may be in the form of a removable enclosure having a side wall and a top wall which can be fastened on the shaft. The lower circumferential edge of the side wall is supported in the region of a step on the first housing part such that it forms a seal.

The follower plate, which may be urged downwardly by a spring reacting against the top wall of the enclosure, is axially slidable on the shaft with its outer circumferential edge in sealing engagement with the side wall of the enclosure. The arrangement is such that negative pressure generated by the feed pump pulls the follower plate downwardly.

The motor and an electric programmable controller are preferably accommodated in a chamber disposed on the underside of the first housing part to maintain the compactness of structure.

The operating time of the feed pump is preferably controlled by a sensor which scans the movement of an indicator pin of the lubricant distributor.

The operating time and/or the rest time of the feed pump can be adjustable by the controller, for example.

Means is provided, such as a magnet and sensor pin, for example, to sense when the follower plate is in its lowest position, thereby indicating that the lubricant in the reservoir is in a low-level condition and in need of replenishment.

Furthermore, a safety valve and/or a refill fitting can be integrated in the housing part.

In a special embodiment of the invention, a membrane keyboard and/or an operating state display are provided on the outside of the housing such that the largely automatic lubricant supply operation can readily be switched on and off either manually or automatically and can easily be monitored with respect to its program flow.

Further objectives, features and advantages of this invention will be in part apparent and in part pointed out hereinafter.

### Brief Description of the Drawings

Figure 1 is front elevation of a lubricant supply device of the present invention;
Figure 2 is a top plan view of a base part of the housing, a pump and an agitator of the supply device;
Fig. 3 is a bottom plan view of the device;
Fig. 4 is a vertical section along lines 4--4 of Fig. 1;
Fig. 4A is an enlarged portion of Fig. 4 showing the pump;
Fig. 5 is a vertical section on lines 5--5 of Fig. 2 but with an upper part of the housing added to show further details;
Fig. 5A is an enlarged portion of Fig. 5 showing a relief valve:
Fig. 6 is a vertical section on lines 6--6 of Fig. 2 but with an upper part of the housing added to show further details;
Figure 7 is a sectional view illustrating a distributor attached to the base part of the housing;
Fig. 8 is a top perspective view of the agitator;
Fig. 9 is a bottom perspective of the agitator and an eccentric;
Fig. 10 is a perspective of the base part of the housing;
Fig. 11 is a top plan of the base part of the housing;
Fig. 12 is a bottom plan of the base part of the housing;
Fig. 13 is a side elevation of the device with portions of the upper part of the upper part of the housing broken away to reveal details;
Fig. 14 is a view similar to Fig. 13 but with additional parts of the housing broken away to show additional details;

Corresponding reference characters indicate corresponding parts throughout the drawings.

### Detailed Description of the Preferred Embodiments

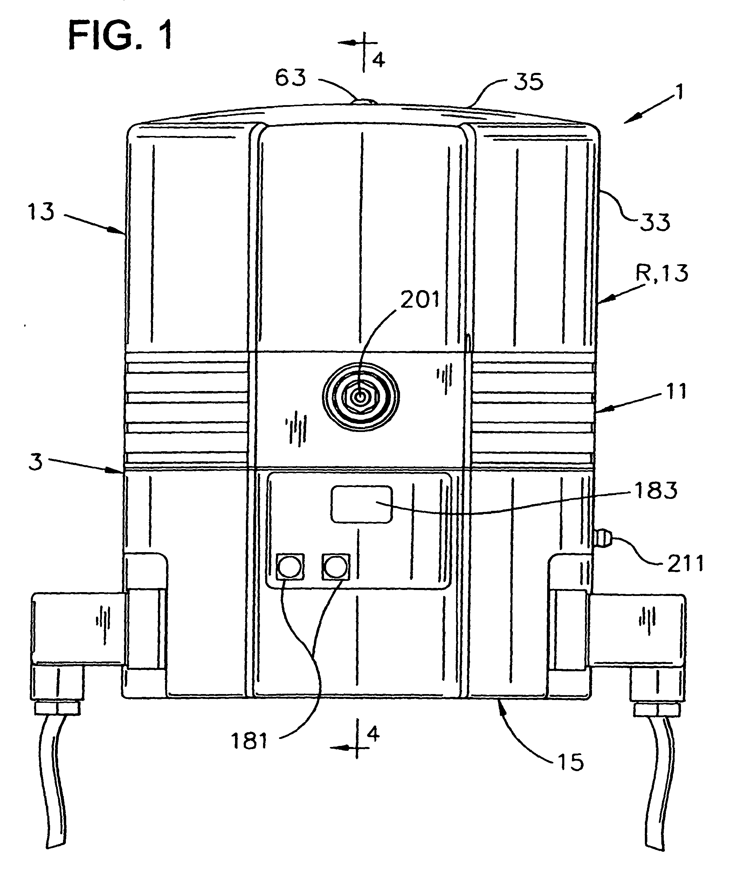

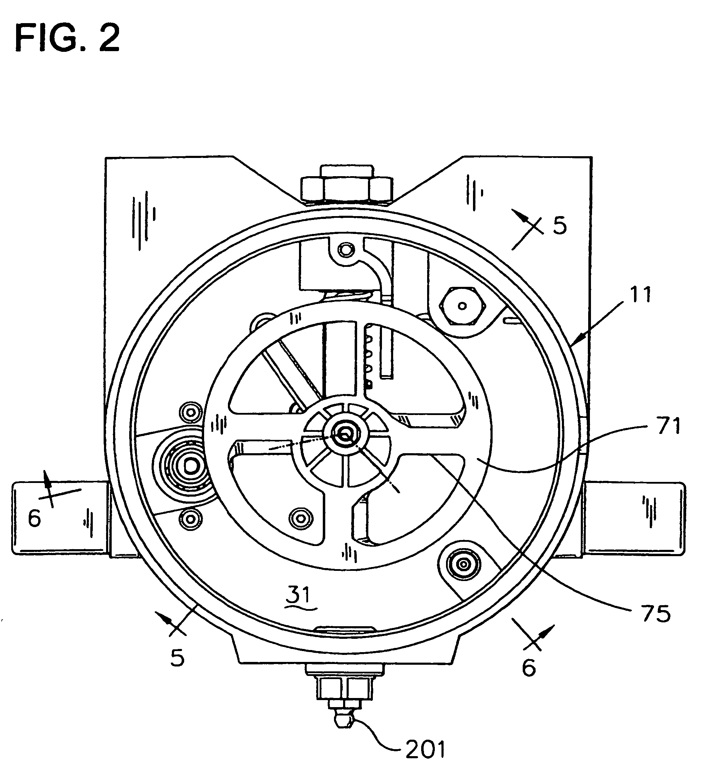

Referring to the drawings, particularly Figs. 1-4, the lubricant supply device of the present invention is designated in its entirety by the reference numeral 1. The device comprises a housing generally designated 3 defining a reservoir R for holding a supply of lubricant, a distributor generally designated 5 connected to the housing for distributing lubricant to multiple points of lubrication, and a feed pump 7 in the housing for delivering lubricant from the reservoir to the distributor. The housing 3 comprises a plurality of parts, including a first part, generally designated 11, which may be referred to as a base for housing various components including the pump 7, a second part, generally designated 13, supported on the base 11 and forming the reservoir R, and a third part generally designated 15, below the base.

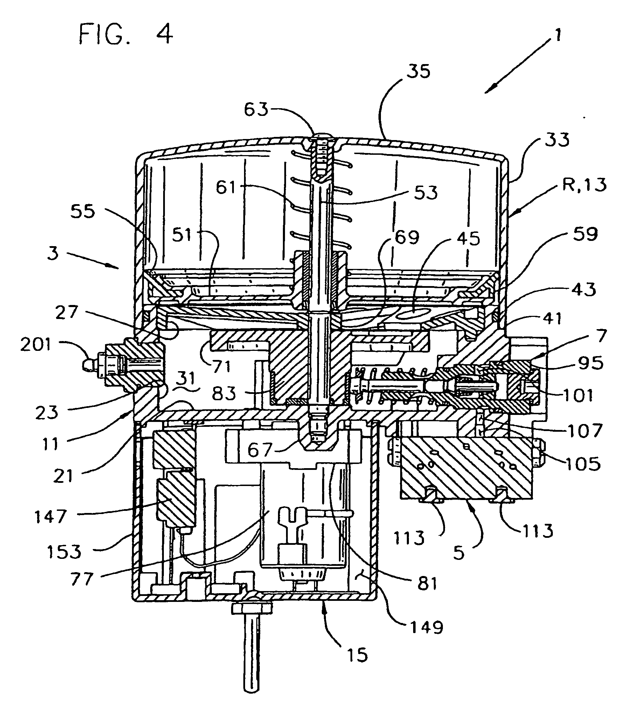

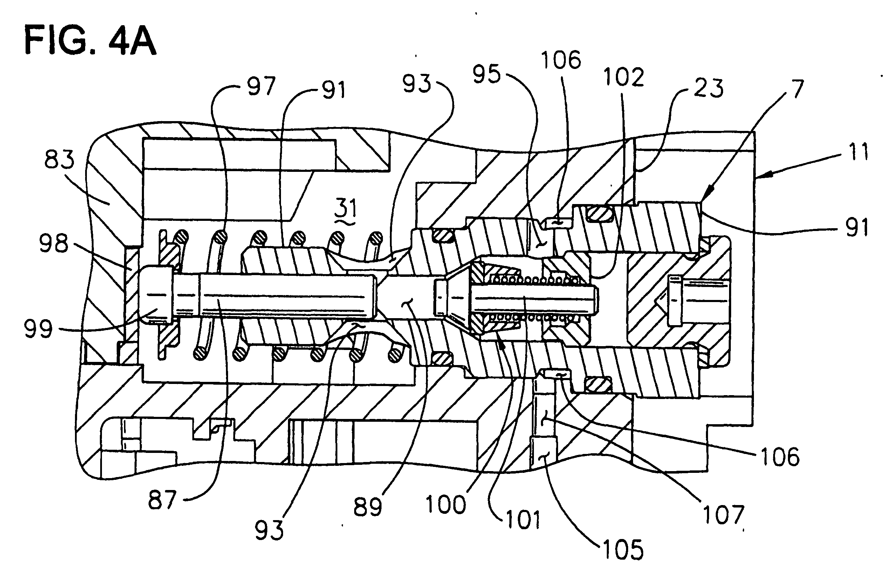

As shown in Fig. 4, the base 11 has a horizontal bottom wall 21, a rim 23 extending up from the bottom wall at its periphery, and an upper wall 27 spaced above the bottom wall and secured (as by fasteners) to the upper part of the rim. The bottom wall 21, rim 23 and upper wall 27 define a pump chamber 31 containing the feed pump 7. The second housing part 13 above the base 11 has a generally cylindric side wall 33 and an integral domed top wall 35 which combine to form the lubricant reservoir R. The bottom edge of the side wall 33 is supported on an annular step or shoulder 41 on the base 11. An O-ring 43 on the base 11 seals against the side wall 33 to ensure a sealing fit. The upper wall 27 of the base has openings 45 in it for flow of lubricant from the reservoir R into the pump chamber 31. A pusher (follower) plate 51 slidable on a vertical shaft 53 in the housing 13 overlies the lubricant in the reservoir R and has an annular seal 55 at its periphery which seals against the side wall 33 of the reservoir. The seal 55 is formed with a stiffening rib 59 (Fig. 4) to reduce flexure of the seal. A coil spring 61 surrounding the shaft 53 between the top wall 35 of the reservoir and the pusher plate 51 urges the plate downwardly to force lubricant through the openings 45 into the pump chamber 31. The upper housing part 13 is removably secured in place by means of a screw 63 extending down through a hole in the top wall 35 of the reservoir R into the upper end of the shaft 53.

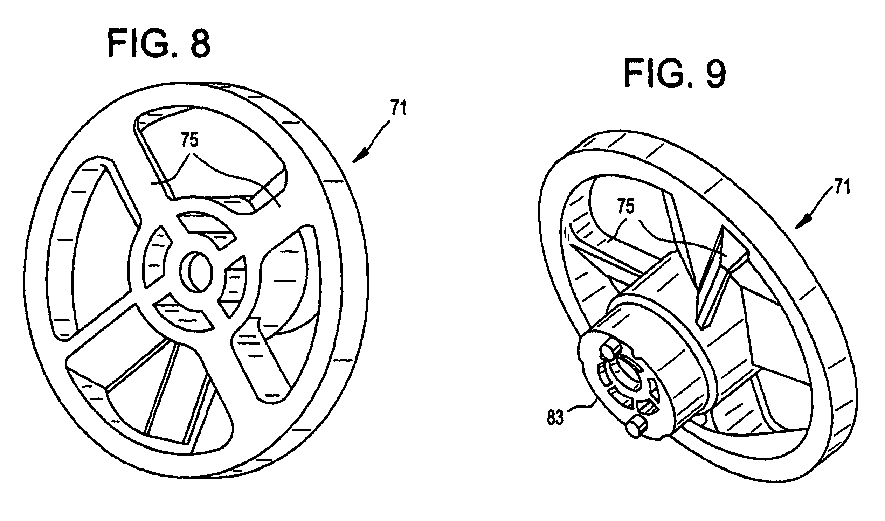

As best illustrated in Fig. 4, the shaft 53 is threadably mounted in a boss 67 formed as an intergral part of the bottom wall 21 of the housing base 11 and extends upward therefrom through a central hub 69 in the upper wall 27 into the reservoir R defined by the second housing part 13. An agitator 71 is rotatable on the shaft 53 immediately below the upper wall 27 of the base to feed lubricant from the reservoir toward the pump 7. As shown in Fig. 8, the agitator 71 may have the configuration of a wheel having spokes 75 shaped to push lubricant in a downward direction as the agitator rotates on the shaft 53. The agitator is rotated by an electric motor 77 (Fig. 4) via a pinion and gearwheel drive 81. An eccentric 83 for driving the pump 7 is rotatable on the shaft 53 immediately below the agitator 71. The eccentric 83 is driven by the same electric motor 77 and is preferably (but not necessarily) formed as an integral part of the agitator, as shown in Fig. 9.

Referring to Figs. 4 and 4A, the pump 7 is an expansible chamber pump comprising a piston 87 mounted for linear reciprocation in the horizontal bore 89 of a cylinder 91 mounted in an opening in the rim 23 of the base 11 of the housing. The cylinder 91 has one or more inlets 93 for entry of lubricant from the pump chamber 31 into the bore 89 of the cylinder, and one or more outlets 95 for exit of lubricant from the bore 89, a charge of lubricant being discharged from the cylinder during a forward pumping stroke of the piston 87 and charge of lubricant being drawn into the cylinder bore during a return stroke of the piston. The piston 87 is urged into contact with the eccentric 83 by a spring 97, so that rotation of the eccentric by the motor functions to reciprocate the piston in the cylinder 91. The eccentric 83 has a collar 98 of wear-resistant material thereon engageable by a cap 99 of wear resistant material on the piston. A spring-biased check valve, generally designated 100, mounted in the cylinder bore 89 prevents reverse flow of lubricant during a return stroke of the piston 87. The check valve 100 has a stem 101 slidable in a guide 102 fixedly mounted in the cylinder bore 89 for guiding the check valve as it moves between an open position during a forward stroke of the piston 87 and a closed position during a return stroke of the piston.

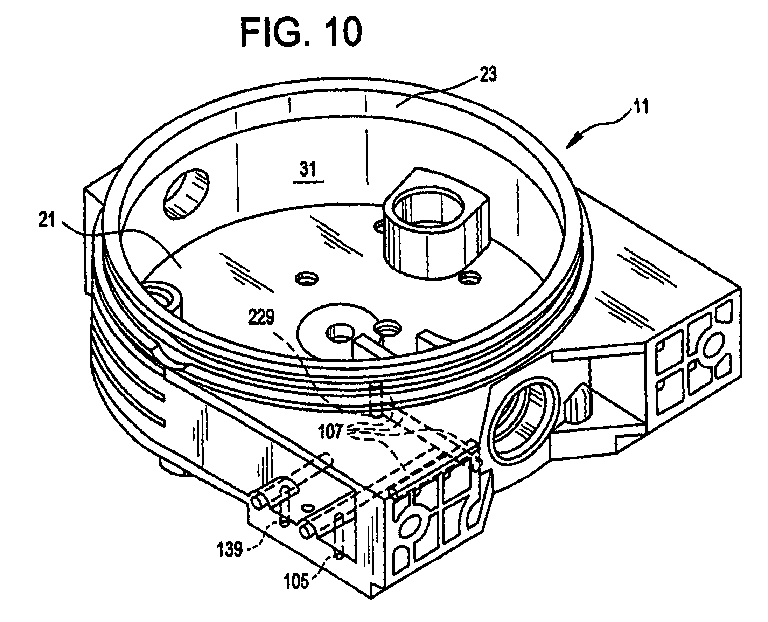

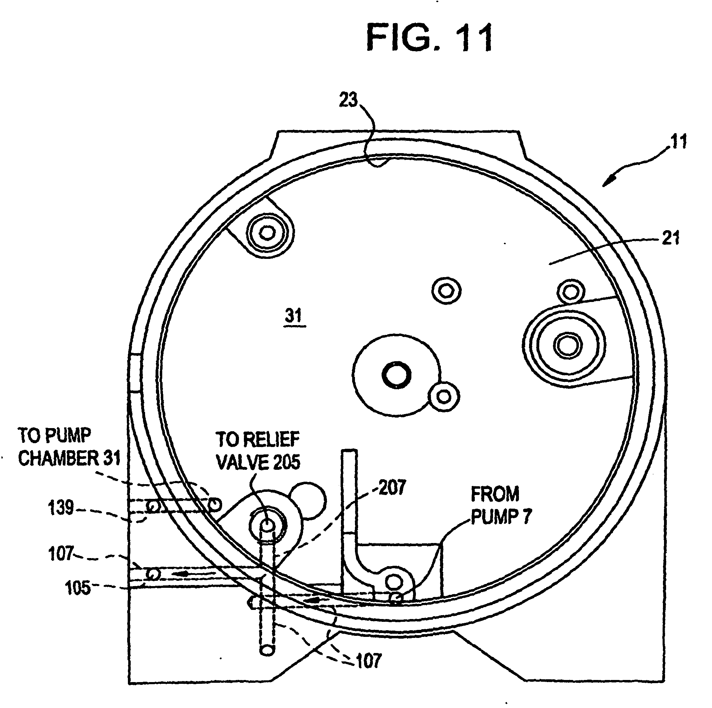

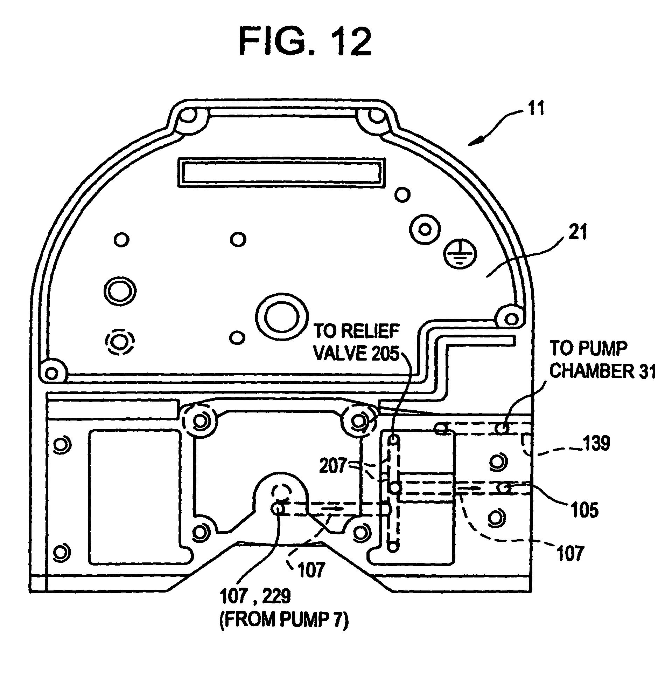

Still referring to Fig. 4A, lubricant is delivered from the pump 7 to one or more outlet openings 105 in the housing by passaging which includes an annular groove 106 in the housing surrounding the cylinder 91 and communicating with the pump outlet(s) 95, and a plurality of bores 107 drilled in the bottom wall 21 of the base 11, as shown in Figs. 10-12, the direction of flow being indicated by arrows. Bores 107 connect the annular groove 106 and the outlet openings 105, only one such outlet opening being shown in the drawings.

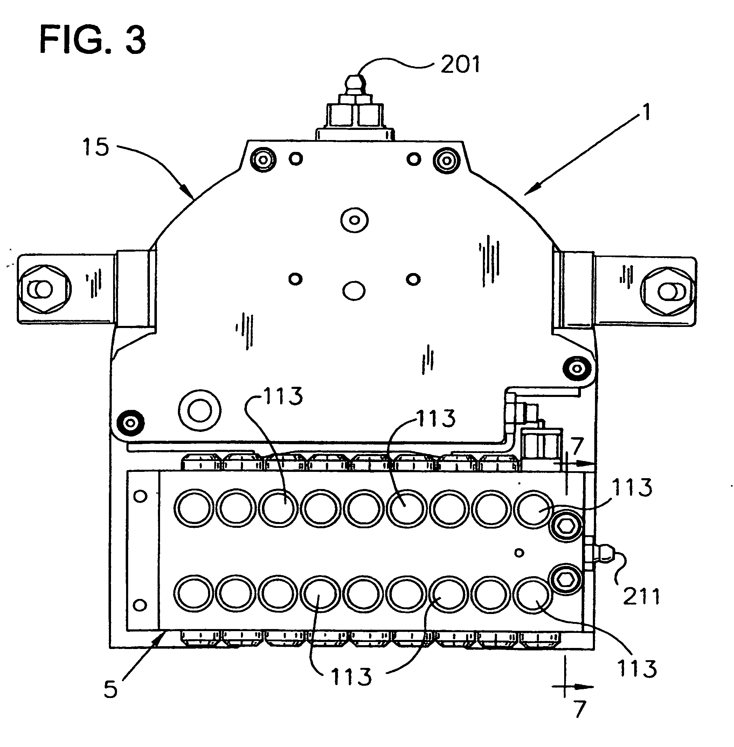

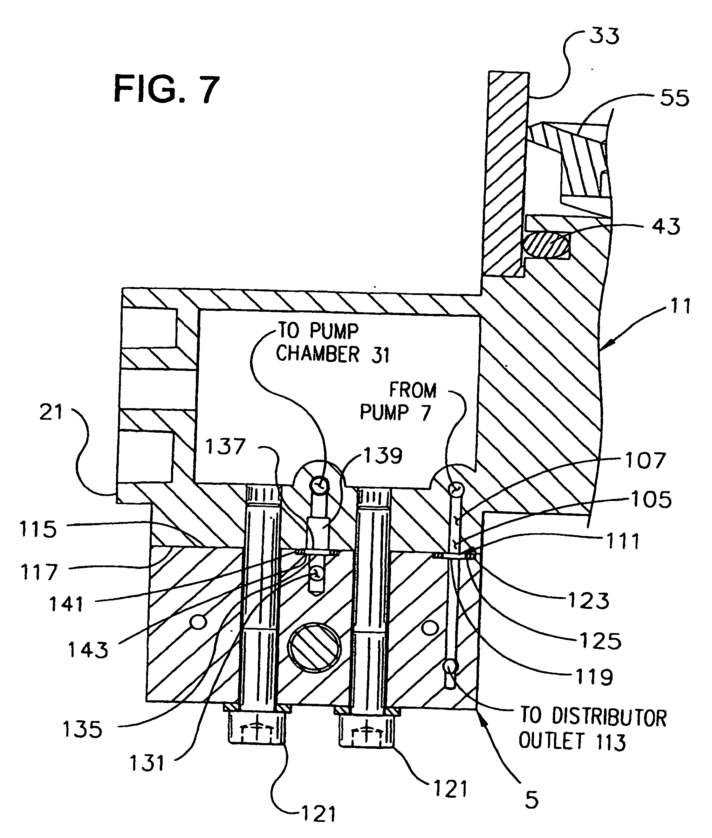

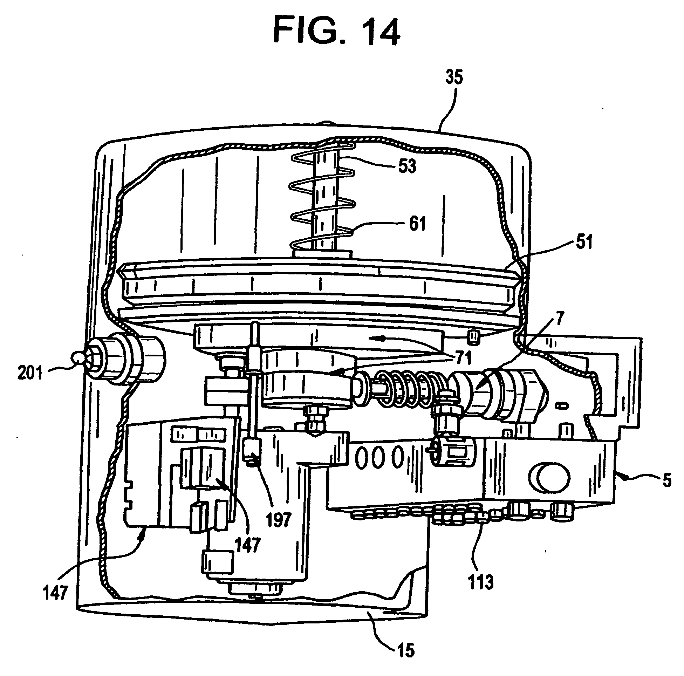

As shown in Figs. 3, 7 and 13, the lubricant distributor 5 preferably has one or more inlets 111 (only one is illustrated in Fig. 7) and multiple outlets 113 connected to delivery lines (e.g., flexible hoses) for delivering lubricant to multiple points of lubrication. (The outlets 113 are shown plugged in the drawings rather than connected to delivery lines). The distributor is preferably a progressive distributor of the type sold by Lincoln Industrial Corporation of St. Louis, Missouri, as an SSV18 divider block, part number 61937582-1. This type of distributor is described in detail in U.S. Patent No. 4,186,821. The distributor 5 (also referred to as a divider valve assembly) contains a series of positive displacement spools which are sequentially moved by incoming lubricant to deliver predetermined quantities of lubricant in series to the outlets 113 of the distributor. (In the embodiment shown in Figs. 1-14, the outlets 113 are on the bottom face of the distributor, but this orientation can vary). Other types of distributors may also be used. Regardless of the type used, however, an important aspect of this invention involves a sealing connection of the distributor 5 directly to the housing 3, without intervening hoses or other lines.

In the embodiment of Figs. 1-14, the distributor 5 is connected directly to the base 11 of the housing 3, although it will be understood that the sealing connection may be between the distributor and other parts of the housing. Where the distributor 5 is connected to the base 11, as shown in Fig. 7, the mating surfaces between the two parts is a downwardly facing surface 115 on the bottom wall 21 of the base and an upwardly facing surface 117 on the distributor. Each distributor inlet 111 comprises an inlet opening 119 in the connecting (mating) face 117 of the distributor. Each of these inlet openings 119 is sized and located to match up to a corresponding outlet opening 105 in the mating surface 115 of the bottom wall 21 of the base 11. The distributor is secured in place to the base 11 by means of screw fasteners 121, or in other suitable fashion. An O-ring 123 (Fig. 7) is provided in a counterbore 125 at the inlet opening 119 of the distributor and seals against the mating surface 115 of the base 11 around the outlet opening 105 to prevent leakage at this interface.

A lubricant return passage 131 (Fig. 7) in the distributor 5 connects the various outlets 113 of the distributor. If one or more of these outlets 113 is not in use, each such outlet can be plugged, in which case the lubricant which would otherwise be discharged through the outlet 113 is directed into the return passage 131 which conveys the lubricant to a return outlet opening 135 in the upwardly facing mating surface 117 of the distributor. This opening 135 is directly opposite an inlet opening 137 of a return passage 139 in the bottom wall 21 of the base 11 of the housing 3. The return passage 139 in the base conveys lubricant back to the pump chamber 31. Consequently, there is no need to divert this lubricant to other outlets 113 of the distributor 5, which might cause excessive lubricant to be delivered to a point of lubrication. An O-ring 141 (Fig. 7) received in a counterbore 143 at the outlet opening 135 of the return passage 131 seals against the mating surface 115 of the base 11 to prevent leakage.

The electric motor 77 and an electronic programmable controller 147 (Fig. 4) are accommodated in a chamber 149 defined by a wall 153 of the third housing part 15 disposed on the underside of the base housing part 13 to ensure compactness of the overall device.

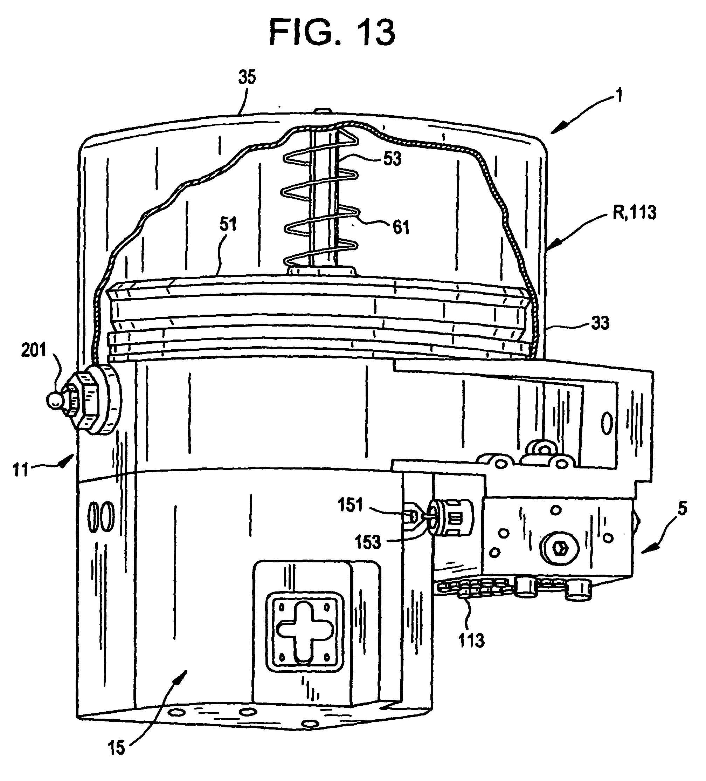

With the aid of the controller 147, the operating time of the feed pump 7 can be controlled by a sensor 151 which scans the movement of an indicator pin 153 of the lubricant distributor (see Fig. 13). The operating time and/or the rest time of the feed pump are adjustable.

A membrane keyboard 181 and/or an operating state display 183 is/are provided on the housing 3, preferably on the second or third housing parts 13, 15, by which the controller 147 can be triggered, switched off and monitored (see Fig. 1).

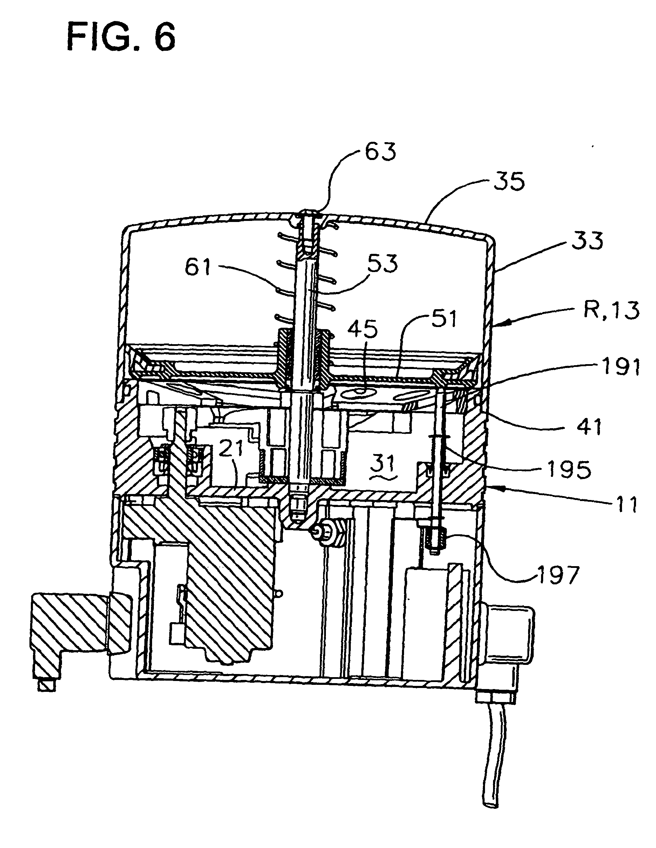

Referring to Fig. 6, a sensor pin 191 extends up through the base 11 of the housing and into the reservoir R. This pin is mounted for sliding movement in the bottom wall 21 of the base 11 and is urged upwardly by a spring 195. The pusher plate 51 is engageable with the upper end of the pin 191 when the plate descends to a level indicating that the level of lubricant in the reservoir is low. As the plate 51 descends further, it pushes the pin 191 down. A suitable sensor 197 (e.g., a magnet sensor) mounted on the underside of the base 11 adjacent the lower end of the sensor pin 191 senses the downward motion of the pin and signals the controller 147 to display an "empty" or "low level" visual message on the display 183 so that the reservoir can be refilled. Refilling is accomplished by using a replenishment fitting 201 (Fig. 4) mounted in the rim 23 of the base 11 of the housing. Lubricant introduced into this fitting enters the pump chamber 31 and fills it to the point where additional lubricant flows up through the openings 45 in the upper wall 27 of the base 11 and into the reservoir R to fill it, the pusher plate 51 rising as the level in the reservoir rises. The second part 13 of the housing can also be transparent to provide a ready visual indication of the level of lubricant in the reservoir.

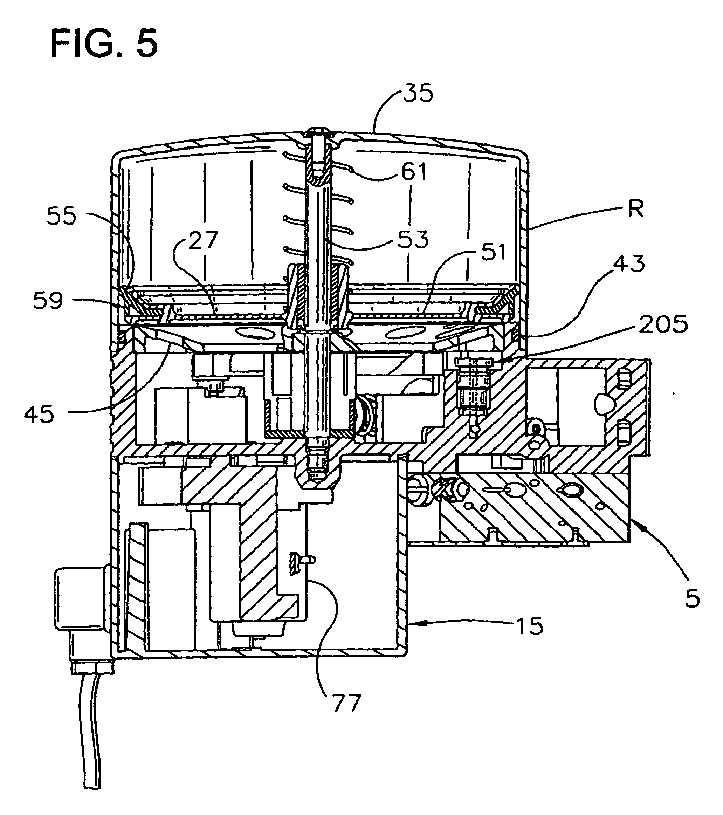

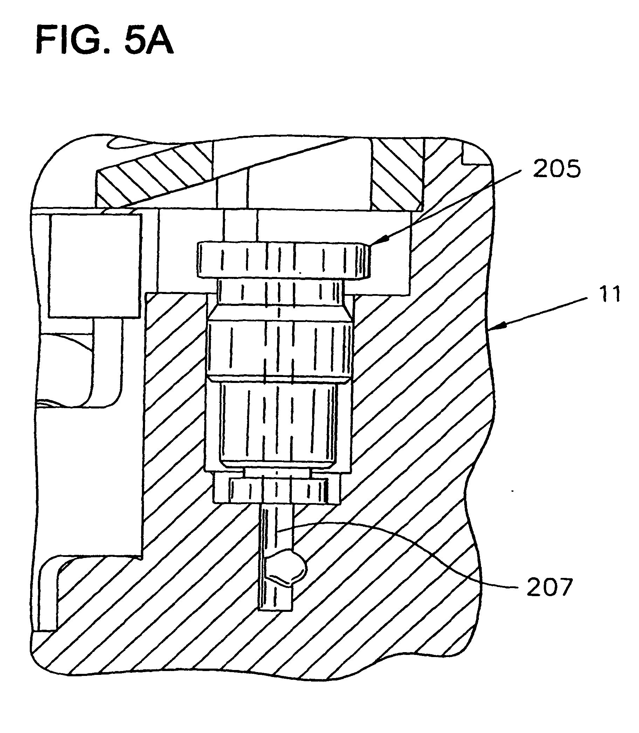

A safety (relief) valve 205 (Fig. 5A) is also integrated into the housing 3. This valve communicates via a relief passage 207 with the supply passages 107 in the base 11. In the event there is a blockage in these passages 107 or in the distributor 5 sufficient to cause the pressure of the lubricant to rise above a predetermined level (e.g., 3000 psi [20.68 Mpa]), the safety valve opens to return additional lubricant delivered from the pump 7 back into the pump chamber 31.

The distributor 5 has an injection port 211 (Fig. 3) by which lubricant can be injected directly into the distributor, bypassing the pump 7, as by using a grease gun or the like. This feature can be used in the event the pump fails, or to test for the location of a blockage in the system in the event there is no flow of lubricant from the distributor. If lubricant pumped into the distributor 5 via the port 211 does not exit the distributor, then the blockage is in the distributor; if the lubricant exits the distributor, then the blockage is upstream from the port in the housing 3 (e.g., in bores 107).

The use of the lubricant supply device 1 described above can be described as follows. When energized, the electric motor 79 rotates the agitator 71 and eccentric 83 on the shaft 53 via the pinion and gearwheel drive 81. Rotation of the agitator feeds lubricant down toward the inlet(s) 93 of the pump 7. Lubricant in the pump chamber 31 is replenished by additional lubricant flowing from the reservoir R through the openings 45 in the upper wall 27 of the base 11, as assisted by the spring-biased pusher plate 51. Rotation of the eccentric 83 drives the piston 87 of the pump through a forward stroke to discharge a quantity of lubricant through the outlet(s) 95 of the pump for delivery to the distributor 5 along a path constituted by the annular groove 106 and supply passages 107 in the bottom wall 21 of the base 11, the outlet opening(s) 105 of the supply passages 107, and across the interface between the mating connecting surfaces 115, 117 directly to the inlet opening(s) 119 of the distributor 5. The return spring 97 urges the piston 87 through a return stroke, generating a negative pressure which draws a new charge of lubricant into the bore 93 of the cylinder 95. The distributor 5 functions to distribute lubricant to multiple points of lubrication by means of lubricant lines connected to the outlet openings 113 of the distributor. Any outlet openings 113 not in use are simply plugged, causing lubricant to these outlets to be directed back to the pump chamber 31 via the return passages 131, 139 in the distributor 5 and base 11.

After a period of operation, the pusher plate 51 in the reservoir R will descend to a level at which it engages the sensor pin 191 and pushes it down. The motion sensor 197 detects this movement and signals the controller 147 to display a suitable low-level message on the display 183 indicating that the reservoir R needs to be refilled. Refilling is accomplished by using the refill fitting 201.

It will be observed from the foregoing that a supply device 1 of the present invention eliminates the need for separate hoses or the like for connecting the housing 3 and pump 7 to the distributor 5. As a result, the device is more compact and reliable in operation. Further, the device is simple to operate, efficient and easy to maintain. The design also provides multiple distributor mounting configurations, including the configuration shown in Figs. 1-14 in which the distributor is "back mounted", i.e., connected directly to the base 11 of the housing.

In view of the above, it will be seen that the several objects of the invention are achieved and other advantageous results attained.

As various changes could be made in the above constructions without departing from the scope of the invention, it is intended that all matter contained in the above description and shown in the accompanying drawings shall be interpreted as illustrative and not in a limiting sense.

## Claims

1. A lubricant supply device (1; 211) comprising:
a housing (3) defining a reservoir (R) for holding a supply of lubricant;
a pump (7) in said housing (3), said pump (7) having an inlet (93) for receiving lubricant from said reservoir (R) and an outlet (95);
a lubricant distributor (5; 215) having a sealing connection with the housing (3), said distributor (5; 215) for delivering predetermined quantities of lubricant to multiple points of distribution, said distributor (5; 215) having one or more inlets (111) for entry of lubricant into the distributor (5; 215) and multiple outlets (113) for exit of lubricant from the distributor (5; 215) for delivery to said multiple points of lubrication;
said sealing connection comprising mating surfaces (115, 117) on the distributor (5; 215) and the housing (3) having a sealing fit with one another;
supply passaging (107) in the housing (3) extending from the outlet (95) of the pump (7) and terminating at one or more outlet openings (105) in the mating surface (115) of the housing,
each of said one or more distributor inlets (111) comprising an inlet opening (119) in the mating surface (117) of the distributor (5; 215) located generally opposite a corresponding outlet opening (105) in the mating surface (115) of the housing (3) whereby lubricant from the pump (7) is adapted to flow from said supply passaging (107) of the housing (3) directly into said one or more distributor inlets (111);
and wherein said housing (3) comprises a first housing part (11) defining a pump chamber (31) for housing the pump (7), said first housing part (11) having a bottom wall (21) with a downwardly facing bottom surface (115) forming said mating surface of the housing (3), said supply passaging (107) in the housing (3) being formed in said bottom wall (21), said distributor (5; 215) having an upwardly facing surface (117) forming said mating surface of the distributor (5; 215).

2. A lubricant supply device (1; 211) according to Claim 1, further comprising a seal between said mating surfaces (115, 117) to prevent leakage of lubricant as it flows from the housing (3) into the distributor (5; 215).

3. A lubricant supply device (1; 211) according to Claim I or Claim 2, further comprising return passaging (131, 139) in the distributor (5; 215) and the housing (3) for return of lubricant from one or more unused outlets (113) of the distributor (5; 215) back to the lubricant reservoir (R).

4. A lubricant supply device (1; 211) according to Claim 3, wherein said return passaging (131, 139) comprises a return passage (131) in the distributor (5; 215) having an outlet opening (113) in said mating surface (115) of the distributor (5; 215) and a return passage (139) in the housing (3) having an inlet opening (137) in said mating surface (117) of the housing (3), the inlet (137) and outlet (113) openings of the return passages (131, 139) being directly opposite one another to enable flow of lubricant from the distributor (5; 215) directly into the housing (3), and a seal (141) for sealing between the inlet (137) and outlet (113) openings of the return passages (131, 139).

5. A lubricant supply device (1; 211) according to any of Claims 1 to 4, wherein said distributor (5; 215) is a positive displacement divider valve assembly which distributes lubricant to the distributor outlets (113) in sequence.

6. A lubricant supply device (1; 211) according to any of Claims 1 to 5, further comprising a vertical shaft (53) in said housing (3), an eccentric (83) rotatably mounted on the shaft (53) and engageable with the pump (7), and a motor (77) for rotating the eccentric (83) to operate the pump (7).

7. A lubricant supply device (1; 211) according to Claim 6, further comprising an agitator (71) on the shaft (53) rotatable to feed lubricant from reservoir (R) to the inlet (93) of the pump (7).

8. A lubricant supply device (1; 211) according to any of Claims 1 to 7, wherein said first housing part (11) further comprises an upper wall (27) spaced above said bottom wall (21), and an opening (45) in the upper wall (27) for the passage of lubricant from the reservoir (R) into the pump chamber (31).

9. A lubricant supply device (1; 211) according to Claim 8, wherein said housing (3) further comprises a second housing part (13) supported on the base (11) and defining said reservoir (R), and a pusher member (51) inside the second housing part (13) for pushing lubricant down into the pump chamber (31) through the opening (45) in said upper wall (27).

10. A lubricant supply device (1; 211) according to any of Claims 6 to 9, further comprising a spring (61) on said shaft (53) for urging said pusher member (51) toward said upper wall (27).

11. A lubricant supply device (1; 211) according to Claim 9 or Claim 10, wherein said second housing part (13) has a side wall (33) and a top wall (35), and wherein said second part (13) is secured in place by a threaded fastener (63) extending through the top wall (35) into an upper end of said shaft (53).

12. A lubricant supply device (1; 211) according to any of Claims 9 to 11, further comprising a system for sensing when said pusher member (51) moves to a position indicating a low-level condition of lubricant in the reservoir (R), and for generating a signal in response thereto.

13. A lubricant supply device (1; 211) according to any of Claims 9 to 12, wherein said housing (3) comprises a third housing part (15) attached to said first housing part (11) for housing the motor (77), and a programmable controller (147) in said third housing part (15) for controlling operation of the motor (77) and the pump (7).

14. A lubricant supply device (1; 211) according to any of Claims 1 to 13, further comprising control means for controlling the operating time of the pump (7), said control means comprising an indicator pin (153) on the distributor (5; 215) movable for indicating outflow of lubricant from the distributor (5; 215), and a sensor (151) for sensing movement of the indicator pin (153).

## Patentansprüche

1. Schmiermittel-Zuführungsvorrichtung (1;211) mit
einem Gehäuse (3), das einen Behälter (R) zur Aufnahme eines Schmiermittelvorrats umgibt;
einer Pumpe (7) in dem Gehäuse (3), die einen Eingang (93) zur Aufnahme von Schmiermittel aus dem Behälter (R) und einen Ausgang (95) hat;
einem Schmiermittelverteiler (5;215) in Dichtungsverbindung mit dem Gehäuse (3) für die Abgabe vorbestimmter Schmiermittelmengen an viele Verteilungspunkte, wobei der Verteiler (5; 215) eine oder mehrere Eingänge (111) für den Schmiermitteleintritt in den Verteiler (5; 215) und viele Ausgänge (113) für den Schmiermittelaustritt aus dem Verteiler (5; 215) zur Abgabe an die vielen Schmierungspunkte hat;
wobei die Dichtungsverbindung auf dem Verteiler (5; 215) und dem Gehäuse (3) zusammenpassende Oberflächen (115,117) mit einem gegenseitigen Dichtungssitz aufweist;
Zuführungsdurchgängen (107) in dem Gehäuse (3), die von dem Ausgang (95) der Pumpe (7) ausgehen und an einer oder mehreren Ausgangsöffnungen (105) in der zusammenpassenden Oberfläche (115) des Gehäuses enden;
wobei jede der genannten einen oder mehreren Verteilereingänge (111) in der zusammenpassenden Oberfläche (117) des Verteilers (5;215) eine im allgemeinen gegenüber einer entsprechenden Ausgangsöffnung (105) in der zusammenpassenden Oberfläche (115) des Gehäuses (3) befindliche Eingangsöffnung (119) aufweist, wodurch Schmiermittel aus der Pumpe (7) von den genannten Zuführungsdurchgängen (107) des Gehäuses (3) direkt in den genannten einen oder mehrere Verteilereingänge (111) strömen kann;
und wobei das Gehäuse (3) einen eine Pumpenkammer (31) zur Aufnahme der Pumpe (7) begrenzenden ersten Gehäuseteil (11) aufweist, der eine Bodenwand (21) mit einer die genannte zusammenpassende Oberfläche des Gehäuses (3) bildende, abwärts gewandte Bodenfläche (115) hat, die Zuführungsdurchgänge (107) in dem Gehäuse (3) in der Bodenwand (21) ausgebildet sind und der Verteiler (5;215) eine die zusammenpassende Oberfläche des Verteilers (5;215) bildende, aufwärts gewandte Oberfläche (117) hat.

2. Schmiermittel-Zufuhrungsvorrichtung (1;211) nach Anspruch 1, ferner mit einer Dichtung zwischen den zusammenpassenden Oberflächen (115,117), um Austritt von Schmiermittel zu verhindern, wenn es von dem Gehäuse (3) in den Verteiler (5;215) strömt.

3. Schmiermittel-Zuführungsvorrichtung (1;211) nach Anspruch 1 oder Anspruch 2, ferner mit Rücklaufkanälen (131,139) in dem Verteiler (5;215) und dem Gehäuse (3) für den Schmiermittelrücklauf von einem oder mehreren unbenutzten Ausgängen Ausgängen (113) des Verteilers (5;215) zurück zu dem Schmiermittelbehälter (R).

4. Schmiermittel-Zuführungsvorrichtung (1;211) nach Anspruch 3, bei der die genannten Rücklaufkanäle (131,139) einen Rücklaufkanal (131) in dem Verteiler (5;215) mit einer Ausgangsöffnung (113) in der zusammenpassenden Oberfläche (115) des Verteilers (5;215) und einen Rücklaufkanal (139) in dem Gehäuse (3) mit einer Eingangsöffnung (137) in der zusammenpassenden Oberfläche (117) des Gehäuses (3) aufweisen, wobei die Eingangsöffnung (137) und Ausgangsöffnung (113) der Rücklaufkanäle (131,139) direkt einander gegenüberliegen, um einem Schmiermittelfluß von dem Verteiler (5;215) direkt in das Gehäuse (3) zu ermöglichen, und eine Dichtung (141) zur Abdichtung zwischen der Eingangsöffnung (137) und der Ausgangsöffnung (113) der Rucklaufkanale (131,139) aufweisen.

5. Schmiermittel-Zuführungsvorrichtung (1;211) nach einem der Ansprüche 1 bis 4, bei der der Verteiler (5;215) ein Verdrängungsteilerventilaggregat ist, das Schmiermittel in Aufeinanderfolge auf die Verteilerausgänge (113) verteilt.

6. Schmiermittel-Zufuhrungsvorrichtung (1;211) nach einem der Ansprüche 1 bis 5, ferner mit einem vertikalen Schaft (53) in dem Gehäuse (3), einem auf dem Schaft (53) drehbar angebrachten und mit der Pumpe (7) in Eingriff bringbaren Exzenter (83) und einem Motor (77) für die Drehung des Exzenters (83) zum Betrieb der Pumpe (7).

7. Schmiermittel-Zuführungsvorrichtung (1;211) nach Anspruch 6, ferner mit einer drehbaren Schaufel (71) auf dem Schaft (53), um Schmiermittel aus dem Behälter (R) dem Eingang (93) der Pumpe (7) zuzuführen.

8. Schmiermittel-Zuführungsvorrichtung (1;211) nach einem der Ansprüche 1 bis 7, bei der das erste Gehäuseteil (11) ferner mit Abstand oberhalb der Bodenwand (21) eine obere Wand (27) und eine Öffnung (45) in der oberen Wand (27) für den Schmiermitteldurchfluß von dem Behälter (R) in die Pumpenkammer (31) aufweist.

9. Schmiermittel-Zuführungsvorrichtung (1;211) nach Anspruch 8, bei der das Gehäuse (3) ferner einen auf der Basis (11) abgestützten und den Behälter (R) begrenzenden zweiten Gehäuseteil (13) und ein Schubelement (51) in dem zweiten Gehäuseteil (13) zum Herabdrücken von Schmiermittel durch die Öffnung (45) in der oberen Wand (27) in die Pumpenkammer (31) umfaßt.

10. Schmiermittel-Zuführungsvorrichtung (1;211) nach einem der Anspruche 6 bis 9, ferner mit einer Feder (61) auf dem Schaft (53), um das Schubelement (51) gegen die obere Wand (27) zu drücken.

11. Schmiermittel-Zuführungsvorrichtung (1;211) nach Anspruch 9 oder Anspruch 10, bei der der zweite Gehäuseteil (13) eine Seitenwandung (33) und eine Kopfwandung (35) hat und bei der der zweite Teil (13) durch ein mit Gewinde versehenes Befestigungsmittel (63) festgehalten ist, das sich durch die Kopfwandung (35) in das obere Ende des Schaftes (53) erstreckt.

12. Schmiermittel-Zuführungsvorrichtung (1;211) nach einem der Ansprüche 9 bis 11, ferner mit einem System zur Feststellung,wenn sich das Schubelement (51) in eine Position bewegt, die ein tiefes Schmiermittelniveau in dem Behälter (R) anzeigt, und zur Erzeugung eines Signals in Reaktion hierauf.

13. Schmiermittel-Zufuhrungsvorrichtung (1;211) nach einem der Anspruche 9 bis 12, bei der das Gehäuse (3) einen an dem ersten Gehäuseteil (11) angebrachten dritten Gehäuseteil (15) zur Aufnahme des Motors (77) und in dem dritten Gehäuseteil (15) einen programmierbaren Regler (147) zur Regelung des Betriebs des Motors (77) und der Pumpe (7) aufweist.

14. Schmiermittel-Zuführungsvorrichtung (1;211) nach einem der Ansprüche 1 bis 13, ferner mit Regeleinrichtungen zur Regelung der Betriebszeit der Pumpe (7), wobei die Regeleinrichtungen einen zur Anzeige des Schmiermittelausflusses aus dem Verteiler (5;215) beweglichen Anzeigerstift (153) auf dem Verteiler (5;215) sowie einen Fühler (151) zur Erfassung einer Bewegung des Anzeigerstiftes (153) umfassen.

## Revendications

1. Dispositif d'alimentation de lubrifiant (1 ; 211) comprenant :
un logement (3) définissant un réservoir (R) destiné à contenir une alimentation de lubrifiant ;
une pompe (7) dans ledit logement (3), ladite pompe (7) comportant une entrée (93) pour recevoir le lubrifiant à partir dudit réservoir (R) et une sortie (95) ;
un distributeur de lubrifiant (5 ; 215) comportant un raccord d'étanchéité avec le logement (3), ledit distributeur (5 ; 215) destiné à fournir des quantités prédéterminées de lubrifiant en différents points de distribution, ledit distributeur (5 ; 215) comportant une ou plusieurs entrées (111) pour l'entrée du lubrifiant dans le distributeur (5 ; 215) et des sorties multiples (113) pour la sortie du lubrifiant à partir du distributeur (5 ; 215) pour l'alimentation auxdits points multiples de lubrification ;
ledit raccord d'étanchéité comprenant des surfaces d'adaptation (115, 117) sur le distributeur (5 ; 215) et un logement (3) avec un ajustage d'étanchéité entre elles;
un passage d'alimentation (107) dans le logement (3) s'étendant depuis la sortie (95) de la pompe (7) et aboutissant dans l'une ou plusieurs ouvertures de sortie (105) dans la surface d'adaptation (115) du logement ;
chacune de ladite une ou desdites plusieurs entrées de distributeur (111) comprenant une ouverture d'entrée (119) dans la surface d'adaptation (117) du distributeur (5 ; 215) située de façon générale de façon opposée à une ouverture de sortie correspondante (105) dans la surface d'adaptation (115) du logement (3), de sorte que le lubrifiant en provenance de la pompe (7) est apte à s'écouler à partir dudit passage d'alimentation (107) du logement (3) directement dans ladite une ou plusieurs entrées de distributeur (111) ;
et dans lequel, ledit logement (3) comprend une première partie de logement (11) définissant une chambre de pompe (31) pour renfermer la pompe (7), ladite première partie de logement (11) comportant une paroi de fond (21) avec une surface de fond faisant face vers le bas (115) formant ladite surface d'adaptation du logement (2), ledit passage d'alimentation (107) dans le logement (3) étant formé dans ladite paroi de fond (21), ledit distributeur (5 ; 215) ayant une surface faisant face vers le haut (117) formant ladite surface d'adaptation du distributeur (5 ; 215).

2. Dispositif d'alimentation de lubrifiant (1 ; 211) selon la revendication 1, comprenant de plus une étanchéité entre lesdites surfaces d'adaptation (115, 117) pour empêcher la fuite de lubrifiant à mesure qu'il s'écoule à partir du logement (3) jusque dans le distributeur (5 ; 215).

3. Dispositif d'alimentation de lubrifiant (1 ; 211) selon la revendication 1 ou la revendication 2, comprenant de plus le passage de retour (131, 139) dans le distributeur (5 ; 215) et le logement (3) pour le retour du lubrifiant à partir d'une ou plusieurs sorties non utilisées (113) du distributeur (5 ; 215) en retour vers le réservoir du lubrifiant (R).

4. Dispositif d'alimentation de lubrifiant (1 ; 211) selon la revendication 3, dans lequel ledit passage de retour (131, 139) comprend un passage de retour (131) dans le distributeur (5 ; 215) avec une ouverture de sortie (113) dans ladite surface d'adaptation (115) du distributeur (5 ; 215) et un passage de retour (139) dans le logement (3) avec une ouverture d'entrée (137) dans ladite surface d'adaptation (117) du logement (3), les ouvertures d'entrée (137) et de sortie (113) des passages de retour (131, 139) étant opposées directement entre elles pour permettre le flux de lubrifiant à partir du distributeur (5 ; 215) directement dans le logement (3) et une étanchéité (141) pour assurer l'étanchéité entre les ouvertures d'entrée (137) et de sortie (113) des passages de retour (131, 139).

5. Dispositif d'alimentation de lubrifiant (1 ; 211) selon l'une quelconque des revendications 1 à 4, dans lequel le distributeur (5 ; 215) est un ensemble de soupapes de séparation à déplacement positif qui distribuent le lubrifiant aux sorties de distributeur (113) en séquence.

6. Dispositif d'alimentation de lubrifiant (1 ; 211) selon l'une quelconque des revendications 1 à 5, comprenant de plus un arbre vertical (53) dans ledit logement (3), à l'excentrique (83) monté de façon rotative sur l'arbre (53) et pouvant coopérer avec la pompe (7) et un moteur (77) pour la rotation de l'excentrique (83) destiné à faire fonctionner la pompe.

7. Dispositif d'alimentation de lubrifiant (1 ; 211) selon la revendication 6, comprenant de plus un agitateur (71) sur l'arbre (53) pouvant entrer en rotation pour alimenter le lubrifiant à partir du réservoir (R) vers l'entrée (93) de la pompe (7).

8. Dispositif d'alimentation de lubrifiant (1 ; 211) selon l'une quelconque des revendications 1 à 7, dans lequel ladite première partie de logement (11) comprend de plus une paroi supérieure (27) espacée au-dessus de ladite paroi de fond (21) et une ouverture (45) dans la paroi supérieure (27) pour le passage du lubrifiant à partir du réservoir (R) jusque dans la chambre de pompe (31).

9. Dispositif d'alimentation de lubrifiant (1 ; 211) selon la revendication 8, dans lequel ledit logement (3) comprend de plus une seconde partie de logement (13) supportée sur la base (11) et définissant ledit réservoir (R) et un élément poussoir (51) à l'intérieur de la seconde partie de logement (13) pour pousser le lubrifiant vers le bas dans la chambre de pompe (31) à travers l'ouverture (45) dans ladite paroi supérieure (27).

10. Dispositif d'alimentation de lubrifiant (1 ; 211) selon l'une quelconque des revendications 6 à 9, comprenant de plus un ressort (61) sur ledit arbre (53) pour forcer ledit élément poussoir (51) vers ladite paroi supérieure (27).

11. Dispositif d'alimentation de lubrifiant (1 ; 211) selon la revendication 9 ou la revendication 10, dans lequel la seconde partie de logement (13) comporte une paroi latérale (33) et une paroi supérieure (35) et dans lequel ladite seconde partie (13) est fixée en place par un dispositif de fixation fileté (63) s'étendant à travers la paroi supérieure (35) jusque dans l'extrémité supérieure dudit arbre (53).

12. Dispositif d'alimentation de lubrifiant (1 ; 211) selon l'une quelconque des revendications 9 à 11, comprenant de plus un système pour capter le moment où ledit élément poussoir (51) se déplace sur une position indiquant une condition bas niveau de lubrifiant dans le réservoir (R) et pour générer un signal en réponse à celui-ci.

13. Dispositif d'alimentation de lubrifiant (1 ; 211) selon l'une quelconque des revendications 9 à 12, dans lequel ledit logement (3) comprend une troisième partie de logement (15) fixée sur ladite première partie de logement (11) pour loger le moteur (77) et un organe de commande programmable (147) dans ladite troisième partie de logement (15) pour commander le fonctionnement du moteur (77) et la pompe (7).

14. Dispositif d'alimentation de lubrifiant (1 ; 211) selon l'une quelconque des revendications 1 à 13, comprenant de plus des moyens de commande pour commander le temps de fonctionnement de la pompe (7), lesdits moyens de commande comprenant un axe indicateur (153) sur le distributeur (5 ; 215) mobile pour indiquer la sortie de lubrifiant du distributeur (5 ; 215) et un capteur (151) pour capter le mouvement de l'axe d'indicateur (153).
